# EUROPEAN PATENT APPLICATION

(11) **EP 4 137 367 A1**
(43) Date of publication of application: **22.02.2023**
(21) Application number: 20930854.3
(22) Date of filing: 17.04.2020
(51) Int. Cl.: B60R 21/38, B62D 25/12

(54) **ENGINE COVER HINGE AND VEHICLE**

(71) Applicant: Ningbo Geely Automobile Research & Development Co. Ltd., Hangzhou Bay New District Ningbo Zhejiang 315336 (CN); Zhejiang Geely Holding Group Co., Ltd., Hangzhou, Zhejiang 310051 (CN)
(72) Inventor: YIN, Xiang, Hangzhou Bay New District Ningbo, Zhejiang 315336 (CN)
(74) Representative: Zaboliene, Reda
(86) International application number: PCT/CN2020/085305
(87) International publication number: WO 2021/208064

(57) **Abstract**

Disclosed is an engine cover hinge. The engine cover hinge comprises a first connecting arm (1), a second connecting arm (2) and a connecting structure (3). The first connecting arm and the second connecting arm are connected by means of the connecting structure; a buffer structure (4) is arranged on the first connecting arm and/or the connecting structure and comprises a connecting plate (41) and a bent plate (42); one end of the connecting plate is connected to the first connecting arm; the other end of the connecting plate is connected to the bent plate; the bent plate is provided with at least one bent part; and a buffer space is provided between the bent plate and the first connecting arm and/or a buffer space is provided between the bent plate and the connecting structure. According to the hinge, when a pedestrian collides with a vehicle, deformation of the hinge can be achieved, and the pedestrian is protected. Further disclosed is a vehicle.

## Description

### TECHNICAL FIELD

The present disclosure relates to a technical field of vehicle engine cover, in particular to an engine cover hinge and a vehicle having the same.

### BACKGROUND

According to statistics, in recent years in China, more than 20,000 pedestrians died in traffic accidents every year, accounting for about 30% of the total traffic accident fatalities. According to road traffic accident statistics in the European Union, pedestrian fatalities are nine times of passenger fatalities. Moreover, the survey shows that in the traffic accident of pedestrian-vehicle collision, the number of deaths due to head collision accounts for a large proportion. When a vehicle collides with a pedestrian, after the vehicle collides with the pedestrian's leg, the pedestrian is likely to hit the front of the vehicle with the leg as the center, and the pedestrian's head is likely to hit the end of the engine cover.

However, due to the excessive vertical rigidity of the hinge currently installed in the engine cover, when the vehicle collides with a pedestrian, the engine cover hinge cannot collapse, resulting in the engine cover being difficult to deform, and unable to absorb the collision energy, which results a great damage to pedestrian.

### SUMMARY

The technical problem to be solved by the present disclosure is that in the prior art, when a pedestrian collides with a vehicle, the engine cover hinge has poor buffering effect and little protection for pedestrians.

In order to solve the abovementioned technical problems, the present disclosure provides an engine cover hinge, the engine cover hinge includes a first connection arm, a second connection arm and a connection structure, and the first connection arm and the second connection arm are connected by the connection structure, the first connection arm and/or the connection structure is provided with a buffer structure.

The buffer structure includes a connection plate and a bending plate. One end of the connection plate is connected to the first connection arm, the other end of the connection plate is connected to the bending plate. The bending plate has at least one bending portion. A buffer space is formed between the bending plate and the first connection arm and/or between the bending plate and the connection structure.

Furthermore, at least a portion of the bending plate protrudes out of one side of the first connection arm or at least a portion of the bending plate protrudes out of one side of the connection structure.

According to an implementable embodiment, the first connection arm and the second connection arm are hinged together.

According to another implementable embodiment, the connection structure includes a first hinge arm and a second hinge arm, one end of the first hinge arm is connected to the first connection arm, and the other end of the first hinge arm is connected to the second connection arm.

One end of the second hinge arm is connected to the first connection arm, the other end of the second hinge arm is connected to the second connection arm, and the first hinge arm is nonparallel to the second hinge arm.

Furthermore, the engine cover hinge further includes a limit structure, the limit structure is arranged on the first connection arm, and the limit structure is arranged between the first hinge arm and the second hinge arm.

Furthermore, the limit structure includes a transition plate and an extension plate, one end of the transition plate is connected to the first connection arm, the other end of the transition plate is connected to one end of the extension plate, and the non-connection end of the extension plate extends in a direction close to the first hinge arm, and the extension plate protrudes out of the side of the first hinge arm away from the connection plate.

Furthermore, the engine cover hinge further includes a support plate, and the support plate is arranged on the second connection arm.

Furthermore, the buffer structure is further provided with a screw hole, an adjustment screw is arranged in the screw hole, and the adjustment screw is used to support the support plate.

Furthermore, the engine cover hinge further includes a first mounting hole and a second mounting hole, and both the first mounting hole and the second mounting hole are at least one.

Furthermore, the present disclosure also provides a vehicle having the above-mentioned engine cover hinge. Adopting the above-mentioned technical solutions, the engine cover hinge and the vehicle described in the present disclosure have the following beneficial effects:

The present disclosure provides an engine cover hinge with a buffer structure, which can realize crushing deformation, to realize the deformation of the hinge when a pedestrian collides with a vehicle, and reduce the impact of the engine cover hinge on the pedestrian's head during the collision, and further improve the pedestrian protection performance of the vehicle.

### BRIEF DESCRIPTION OF THE DRAWINGS

In orderto illustrate the technical solutions in the embodiments of the present disclosure more clearly, the following briefly introduces the drawings that are required to be used in the description of the embodiments. Obviously, the drawings in the following description only show some embodiments of the present disclosure. For those of ordinary skill in the art, other drawings can also be obtained from these drawings without creative work.
FIG. 1 is a schematic view shown a position relationship between a buffer structure and an engine cover hinge according to an embodiment of the present disclosure;
FIG. 2 is the schematic view after the buffer structure in FIG. 1 is deformed;
FIG. 3 is a schematic view shown a position relationship between the buffer structure and the engine cover hinge according to another embodiment of the present disclosure;
FIG. 4 is the schematic view after the buffer structure in FIG. 3 is deformed;
FIG. 5 is a schematic view of the overall structure of the engine cover hinge according to a further embodiment of the present disclosure;
FIG. 6 is a schematic rear view of the overall structure of the engine cover hinge in FIG. 5;

In the figure, 1-first connection arm, 2-second connection arm, 3-connection structure, 31-first hinge arm, 32-second hinge arm, 4-buffer structure, 41-connection plate, 42-bending plate, 5-limit structure, 6-support plate, 7-adjustment screw, 8-first mounting hole, 9-second mounting hole.

### DETAILED DESCRIPTION OF PREFERRED EMBODIMENTS

In order to make those of ordinary skill in the art better understand the solutions of the present disclosure, the technical solutions in the embodiments of the present disclosure will be clearly and completely described below with reference to the accompanying drawings in the embodiments of the present disclosure. Obviously, the described embodiments are only part of the embodiments of the present disclosure, but not all of the embodiments. Based on the embodiments in the present disclosure, all other embodiments obtained by those of ordinary skill in the art without creative work shall fall within the scope of protection of the present disclosure.

Reference herein to "one embodiment" or "an embodiment" refers to a particular feature, structure, or characteristic that may be included in at least one implementation of the present disclosure. In the description of the present disclosure, it should be understood that the orientation or positional relationship indicated by terms "upper", "top", "bottom" and the like are based on the orientation or positional relationship shown in the accompanying drawings, and is only for the convenience of description, rather than intended to indicate or imply that the device or element must have a particular orientation, be constructed and operate in a particular orientation, and therefore should not be construed as a limitation of the present disclosure. In addition, the terms "first" and "second" are only used for descriptive purposes, and should not be construed as indicating or implying relative importance or implying the number of indicated technical features. Thus, a feature defined as "first" and "second" may expressly or implicitly include one or more of that feature. Also, the terms "first," "second" and the like are used to distinguish similar objects, and are not necessarily used to describe a particular order or precedence. It is to be understood that the data so used may be interchanged under appropriate circumstances so that the embodiments of the present disclosure described herein can be practiced in sequences other than those illustrated or described herein.

In order to solve the above technical problems, the present disclosure discloses an engine cover hinge.

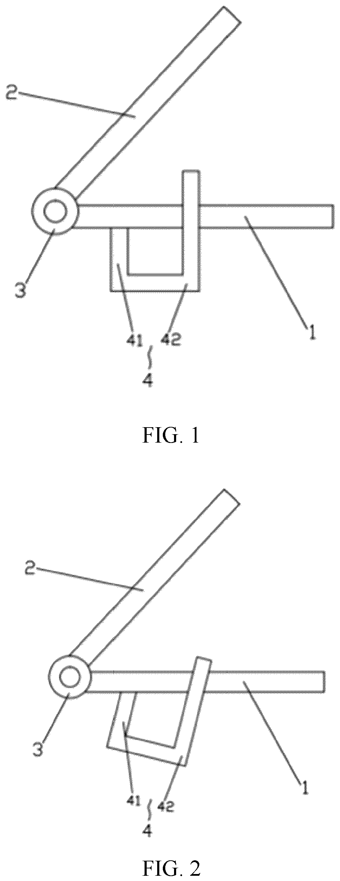

According to an implementable embodiment, the present disclosure provides a structure of the engine cover hinge. The engine cover hinge may include a two-wing hinge, a four-link hinge, and the like. As shown in FIGS. 1-4, the engine cover hinge includes a first connection arm 1, a second connection arm 2 and a connection structure 3. The first connection arm 1 is connected to the second connection arm 2 through the connection structure 3. The first connection arm 1 and/or the connection structure 3 is provided with a buffer structure 4.

The buffer structure 4 includes a connection plate 41 and a bending plate 42. One end of the connection plate 41 is connected to the first connection arm 1. Specifically, the connection plate 41 is fixedly connected to the first connection arm 1, for example, by welding connection, adhesive connection, and the like. The other end of the connection plate 41 is connected to the bending plate 42. Specifically, the connection plate 41 is fixedly connected to the bending plate 42, for example, by welding connection, adhesive connection and the like. In some embodiments, the buffer structure 4(i.e., the connection plate 41 and the bending plate 42) is integrally formed into a single piece. The bending plate 42 has at least one bending portion, and a buffer space is formed between the bending plate 42 and the first connection arm 1 and/or between the bending plate 42 and the connection structure 3.

Furthermore, the bending plate 42 at least partially protrudes out of one side of the first connection arm 1 or the bending plate 42 at least partially protrudes out of one side of the connection structure 3.

According to an implementable embodiment, the connection structure is a two-wing hinge.

Specifically, as shown in FIG. 1 and FIG. 2, in this embodiment, a two-wing hinge is taken as an example for specific description:

Specifically, the buffer structure 4 is located on the first connection arm 1, and the buffer structure 4 includes a connection plate 41 and a bending plate 42. One end of the connection plate 41 is connected to the first connection arm 1, the other end of the connection plate 41 is connected to the bending plate 42. The bending plate 42 has one bending portion to form an L-shaped bending plate. The L-shaped bending plate includes a horizontal portion and a vertical portion. One end of the connection plate 41 is connected to the bottom of the first connection arm 1, and the other end of the connection plate 41 is connected to the horizontal portion of the bending plate 42. The other end of the horizontal portion is connected to one end of the vertical portion, and the other end of the vertical portion extends in a direction close to the second connection arm 2 and extends out of the top of the first connection arm 1.

The horizontal portion is located below the first connection arm 1, and a buffer space is formed between the horizontal portion and the first connection arm 1.

Furthermore, when a pedestrian collides with a vehicle, the buffer structure 4 is deformed, from the configuration in FIG. 1 to the configuration in FIG. 2, to absorb part of the collision energy and reduce the collision damage of the engine cover hinge to the pedestrian's head during the collision, thereby improving the pedestrian protection performance of the vehicle.

According to another implementable embodiment, the present disclosure provides another structure of the engine cover hinge. Specifically, as shown in FIG. 1 and FIG. 2, the engine cover hinge includes a first connection arm 1, a second connection arm 2 and a connection structure 3. The first connection arm 1 is connected to the second connection arm 2 by the connection structure 3. A buffer structure 4 is provided on the first connection arm 1 and/or the connection structure 3. The buffer structure 4 includes a connection plate 41 and a bending plate 42. One end of the connection plate 41 is connected to the first connection arm 1, and the other end of the connection plate 41 is connected to the bending plate 42. The bending plate 42 has at least one bending portion, a buffer space is formed between the bending plate 42 and the first connection arm 1 and/or between the bending plate 42 and the connection structure 3.

Furthermore, the bending plate 42 at least partially protrudes out of one side of the first connection arm 1 or the bending plate 42 at least partially protrudes out of one side of the connection structure 3.

According to an implementable embodiment, the connection structure 3 includes a first hinge arm 31 and a second hinge arm 32. One end of the first hinge arm 31 is connected to the first connection arm 1, and the other end of the first hinge arm 32 is connected to the second connection arm 2.

One end of the second hinge arm 32 is connected to the first connection arm 1, the other end of the second hinge arm 32 is connected to the second connection arm 2, the first hinge arm 1 is nonparallel to the second hinge arm 2.

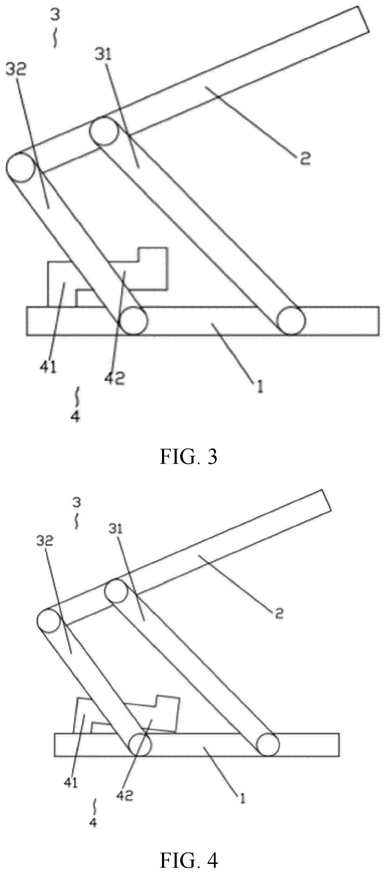

Specifically, as shown in Figures 3 and 4, a four-link hinge is taken as an example to illustrate:

The buffer structure 4 is located on the first connection arm 1, and the buffer structure 4 takes the top of the first connection arm 1 as an installation point.

The buffer structure 4 includes a connection plate 41 and a bending plate 42. One end of the connection plate 41 is connected to the first connection arm 1, and the other end of the connection plate 41 is connected to the bending plate 42. The bending plate 42 has one bending portion to form an L-shaped bending plate. The L-shaped bending plate includes a horizontal portion and a vertical portion.

One end of the connection plate 41 of the buffer structure 4 is connected to the top of the first connection arm 1, the other end of the connection plate 41 is connected to the horizontal portion of the bending plate 42, and the other end of the horizontal portion is connected to the vertical portion. The other end of the vertical portion extends in a direction close to the second connection arm 2.

The horizontal portion is located above the first connection arm 1, and a buffer space is formed between the horizontal portion and the first connection arm 1.

Furthermore, when a pedestrian collides with a vehicle, the buffer structure 4 is deformed, from the configuration in FIG. 3 to the configuration in FIG. 4, to absorb part of the collision energy and reduce the collision damage of the engine cover hinge to the pedestrian's head during the collision, thereby improving the pedestrian protection performance of the vehicle.

It can be understood that, the abovementioned buffer structure is only for illustration, rather than for limiting the protection scope of the present disclosure. The buffer structure may have other shapes. For example, the connection plate 41 may be disposed on the upper side or the lower side of the first connection arm 1. The number of the bending portions of the bending plate in the buffer structure is only a preferred embodiment. In other implementable embodiments, the number of the bending portions can be 2 or 3 or other number. The connection plate 41 and the bending plate 42 may be of the same thickness or different thicknesses. Different bending portions of the bending plate 42 may have the same thickness or different thicknesses, or the same length or different lengths.

Furthermore, in the above embodiments, the buffer structures 4 are all disposed on the first connection arm 1, and in other embodiments having other connection structures, the buffer structures 4 may be disposed on the connection structure 3. For example, in the present disclosure, if the connection structure 3 includes the first hinge arm 31 and the second hinge arm 32, the buffer structure 4 may be arranged on the second hinge arm 32, or the buffer structure 4 may be arranged on both the first hinge arm 31 and the first connection arm 1, and the principle of arrangement is the same, which will not be repeated here.

Furthermore, the engine cover hinge also includes a limit structure 5, a support plate 6, a first mounting hole 8 and a second mounting hole 9. The buffer structure 4 is also provided with a screw hole, the screw hole is matched with an adjustment screw 7. The adjustment screw 7 is arranged below the support plate 6, and the adjustment screw 7 is used to support the support plate 6. Taking the above-mentioned four-bar hinge as an example, the overall structure of the engine cover hinge is described as follows:

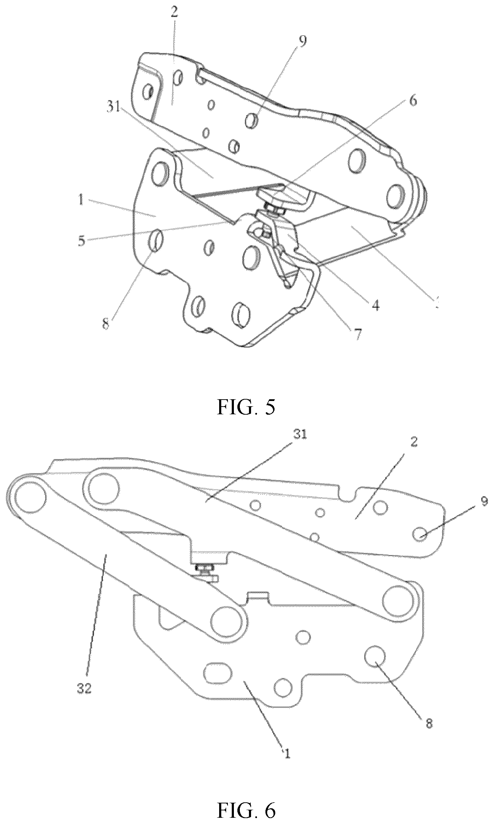

Specifically, as shown in FIGS. 5 and 6, the engine cover hinge includes a first connection arm 1, a second connection arm 2, a connection structure 3, a limit structure 5, a support plate 6, a first mounting hole 8 and a second mounting holes 9. The first connection arm 1 is connected to the vehicle body through the first mounting hole 8, the second connection arm 2 is connected to the engine cover of the vehicle through the second mounting hole 9. The first connection arm 1 and the second connection arm 2 are connected by the connection structure 3, and the first connection arm 1 is provided with a buffer structure 4.

The buffer structure 4 includes a connection plate 41 and a bending plate 42. One end of the connection plate 41 is connected to the first connection arm 1, and the other end of the connection plate 41 is connected to the bending plate 42. The bending plate 42 has at least one bending portion, and a buffer space is formed between the bending plate 42 and the first connection arm 1.

The connection structure 3 includes a first hinge arm 31 and a second hinge arm 32. One end of the first hinge arm 31 is connected to the first connection arm 1, and the other end of the first hinge arm 32 is connected to the second connection arm 2.

One end of the second hinge arm 32 is connected to the first connection arm 1, the other end of the second hinge arm 32 is connected to the second connection arm 1, the first hinge arm 31 is nonparallel to the second hinge arm 32.

The limit structure 5 is provided on the first connection arm 1, and the limit structure 5 is provided between the first hinge arm 31 and the second hinge arm 32. The limit structure 5 includes a transition plate and an extension plate. One end of the transition plate is connected to the first connection arm 1, the other end of the transition plate is connected to one end of the extension plate, and the non-connection end of the extension plate extends in a direction close to the first hinge arm 31, and the extension plate extends out of the side of the first hinge arm 31 away from the connection plate 41.

The support plate 6 is disposed on the second connection arm 2, and the support plate 6 is located above the buffer structure 4.

Furthermore, the buffer structure 4 is further provided with a screw hole. An adjustment screw 7 is fitted in the screw hole, and the adjustment screw 7 is arranged below the support plate 6.

Furthermore, the present disclosure also provides a vehicle, the vehicle has the above-mentioned engine cover hinge, the first connection arm (1) of the engine cover hinge is connected to the vehicle body, and the second connection arm (2) of the engine cover hinge is connected to the engine cover of the vehicle.

In the engine cover hinge provided by the present disclosure, the buffer structure can realize crushing deformation, to realize the deformation of the hinge when the pedestrian collides with the vehicle, and reduce the collision damage of the engine cover hinge to the pedestrian's head during the collision, thereby improving the pedestrian protection performance of the vehicle.

The above descriptions are only preferred embodiments of the present disclosure, and are not intended to limit the present disclosure. Any modifications, equivalent replacements, improvements, and the like, made within the spirit and principles of the present disclosure shall be included within the protection range of the present disclosure.

## Claims

1. A engine cover hinge, comprising
a first connection arm (1), a second connection arm (2) and a connection structure (3), the first connection arm (1) and the second connection arm (2) being connected by the connection structure (3), and the first connection arm (1) and/or the connection structure (3) being provided with a buffer structure (4),
the buffer structure (4) comprising a connection plate (41) and a bending plate (42), one end of the connection plate (41) being connected to the first connection arm (1), and the other end of the connection plate (41) being connected to the bending plate (42), the bending plate (42) having at least one bending portion, a buffer space being formed between the bending plate (42) and the first connection arm (1) and/or between the bending plate (42) and the connection structure (3).

2. The engine cover hinge according to claim 1, wherein the bending plate (42) is at least partially protruded from one side of the first connection arm (1) or the bending plate (42) or at least partially protrude from one side of the connection structure (3).

3. The engine cover hinge according to claim 1, wherein the first connection arm (1) is hinged to the second connection arm (2).

4. The engine cover hinge according to claim 1, wherein the connection structure (3) comprises a first hinge arm (31) and a second hinge arm (32), one end of the first hinge arm (31) is connected to the first connection arm (1), the other end of the first hinge arm (32) is connected to the second connection arm (2), one end of the second hinge arm (32) is connected to the first connection arm (1), the other end of the second hinge arm (32) is connected to the second connection arm (2), and the first hinge arm (31) is nonparallel to the second hinge arm (32).

5. The engine cover hinge according to claim 4, wherein the engine cover hinge further comprises a limit structure (5), the limit structure (5) is arranged on the first connection arm (1), and the limit structure (5) is arranged between the first hinge arm (31) and the second hinge arm (32).

6. The engine cover hinge according to claim 5, wherein the limit structure (3) comprises a transition plate and an extension plate, one end of the transition plate is connected to the first connection arm (1), the other end of the transition plate is connected to one end of the extension plate, a non-connection end of the extension plate extends in a direction close to the first hinge arm (31), and the extension plate extends out of one side of the first hinge arm (31) away from the connection plate.

7. The engine cover hinge according to claim 1, wherein the engine cover hinge further comprises a support plate (6), and the support plate (6) is arranged on the second connection arm (2).

8. The engine cover hinge according to claim 7, wherein the buffer structure (4) is further provided with a screw hole, an adjustment screw (7) is fitted in the screw hole, and the adjustment screw (7) is used to support the support plate (6).

9. The engine cover hinge according to claim 1, wherein the engine cover hinge further comprises a first mounting hole (8) and a second mounting hole (9), both the first mounting hole (8) and the second mounting holes (9) are at least one.

10. A vehicle, comprising the engine cover hinge according to claims 1-9, the first connection arm (1) of the engine cover hinge is connected to a body of the vehicle, and the second connection arm (2) is connected to an engine cover of the vehicle.
